# EUROPÄISCHE PATENTSCHRIFT

(11) **EP 3 362 326 B1**
(45) Veröffentlichungstag und Bekanntmachung des Hinweises auf die Patenterteilung: **04.12.2019**
(21) Anmeldenummer: 16793767.1
(22) Anmeldetag: 16.10.2016
(51) Int. Cl.: B60R 22/34

(54) **VORRICHTUNG UND VERFAHREN ZUR BEEINFLUSSUNG DER KRAFT EINES SICHERHEITSGURTES**
DEVICE AND METHOD FOR INFLUENCING THE FORCE OF A SEATBELT
DISPOSITIF ET PROCÉDÉ DESTINÉ À INFLUENCER LA FORCE D'UNE CEINTURE DE SÉCURITÉ

(30) Priorität: 15.10.2015 DE 102015117595
(43) Veröffentlichungstag der Anmeldung: 22.08.2018
(73) Patentinhaber: Inventus Engineering GmbH, 6771 St. Anton i. M. (AT)
(72) Erfinder: BATTLOGG, Stefan, 6771 St. Anton i.M. (AT)
(74) Vertreter: BSB Patentanwälte Schütte & Engelen Partnerschaft mbB
(86) Internationale Anmeldenummer: PCT/EP2016/074824
(87) Internationale Veröffentlichungsnummer: WO 2017/064316

(56) Entgegenhaltungen:
- DE-A1- 19 963 580
- DE-A1-102010 024 420
- US-A1- 2003 192 977
- US-A1- 2010 007 125

## Beschreibung

Die vorliegende Erfindung betrifft eine Vorrichtung und ein Verfahren zur Beeinflussung der Kraft eines Sicherheitsgurtes auf zum Beispiel einen Insassen eines Personentransportmittels beispielsweise bei einer Kollision.

Aus dem Stand der Technik sind Vorrichtungen und Verfahren bekannt geworden, mit denen die auf einen Insassen einwirkende Kraft eines Sicherheitsgurtes zum Beispiel bei einem Auffahrunfall begrenzt werden kann, um mögliche Gesundheitsschäden des Insassen durch eine zu große Kraft des Sicherheitsgurts zu vermeiden. Dazu wird im Stand der Technik beispielsweise ein Torsionsstab eingesetzt, der bei einer Kollision nach der automatischen Straffung des Sicherheitsgurts tordiert und somit die maximal auf den Insassen wirkende Kraft begrenzt. Derartige Systeme funktionieren an sich zuverlässig. Ein Nachteil daran ist aber, dass der Kraftverlauf nicht beeinflusst werden kann.

Die gattungsbildende DE 102 16 862 B4 und die parallele US 2003/0192977 A1 offenbaren einen Gurtaufroller für einen Fahrzeugsicherheitsgurt, bei dem zwischen den Zähnen eines Außen- und Innenläufers mit einem fließfähigen Medium gefüllte Räume gebildet sind und bei dem beim Drehen des Gurtaufrollers das fließfähige Medium von einem Raum mit sich verringerndem Volumen in einen Raum mit sich vergrößerndem Volumen fließt, wobei das fließfähige Medium ein magneto- oder elektrorheologisches Fluid sein kann.

Die DE 10 2010 024 420 A1 offenbart einen Sicherheitsgurt mit einer Kraftbegrenzungsfunktion, wobei ein mit einem elektro- oder magnetorheologischem Medium gefüllter Hohlraum ausgebildet ist und wobei das Medium durch eine Duchströmöffnung fließt, die mit einem elektrischen oder magnetischen Feld beaufschlagbar ist.

Es ist deshalb die Aufgabe der vorliegenden Erfindung, eine Vorrichtung und ein Verfahren zur Beeinflussung der Kraft eines Sicherheitsgurtes auf zum Beispiel einen Insassen eines Personentransportmittels zur Verfügung zu stellen, womit eine flexiblere Beeinflussung des Kraftverlaufs möglich ist.

Diese Aufgabe wird gelöst durch eine Vorrichtung mit den Merkmalen des Anspruchs 1 und durch ein Verfahren mit den Merkmalen des Anspruchs 15. Bevorzugte Weiterbildungen sind Gegenstand der Unteransprüche. Weitere Vorteile und Merkmale der vorliegenden Erfindung ergeben sich aus der allgemeinen Beschreibung und aus der Beschreibung der Ausführungsbeispiele. Eine erfindungsgemäße Vorrichtung zur Beeinflussung der Kraft eines Sicherheitsgurtes auf zum Beispiel eines Insassen eines Personentransportmittels beispielsweise bei bzw. insbesondere bei einer Kollision umfasst wenigstens einen Drehdämpfer mit einem magnetorheologischen Fluid als Arbeitsfluid zur Dämpfung einer Drehbewegung einer Dämpferwelle des Drehdämpfers beim Auf- oder Abwickeln des Sicherheitsgurts. Die Dämpferwelle ist wenigstens abschnittsweise in einem Gehäuse des Drehdämpfers aufgenommen. Insbesondere wird der Sicherheitsgurt auf eine Gurtrolle aufgewickelt bzw. davon abgewickelt. Der Drehdämpfer weist wenigstens eine Verdrängereinrichtung mit ineinander eingreifenden und insbesondere rotierenden Verdrängerkomponenten auf. Wenigstens in der Verdrängereinrichtung ist das magnetorheologische Fluid enthalten. Die ineinander eingreifenden und insbesondere rotierenden Verdrängerkomponenten werden durch das magnetorheologische Fluid benetzt bzw. die Verdrängerkomponenten verdrängen das magnetorheologische Fluid als Arbeitsfluid. Durch eine zugeordnete Steuereinrichtung ist ein Magnetfeld einer wenigstens eine elektrische Spule umfassenden Magnetfeldquelle steuerbar und das magnetorheologische Fluid beeinflussbar, um eine Dämpfung der Drehbewegung der Dämpferwelle einzustellen. Ein wesentlicher Teil des Magnetfeldes der Magnetfeldquelle durchtritt einen Axialspalt zwischen dem Gehäuse und wenigstens einer der Verdrängerkomponenten. Dadurch wird es insbesondere ermöglicht, bei einem Wickelvorgang der Gurtrolle das Auf- oder Abwickeln des Sicherheitsgurts gezielt zu dämpfen. Dabei ist auch eine zeitlich variable und auch sensorgeführte Steuerung möglich.

Die erfindungsgemäße Vorrichtung hat viele Vorteile. Ein erheblicher Vorteil der erfindungsgemäßen Vorrichtung besteht darin, dass durch eine Steuereinrichtung ein Magnetfeld einer elektrischen Spule gezielt gesteuert wird, um so das magnetorheologische Fluid gezielt zu beeinflussen. Die zum Beispiel aus Carbonyleisenpulver bestehenden Partikel in dem magnetorheologischen Fluid verketten sich unter Einfluss eines Magnetfeldes. Die Stärke der Verkettung hängt von der Stärke des Magnetfeldes ab. Somit kann flexibel jederzeit auf sich verändernde äußere Bedingungen reagiert werden und die Kraft eines Sicherheitsgurtes in Echtzeit eingestellt werden. Ein magnetorheologisches Fluid reagiert innerhalb von 1 ms oder innerhalb von wenigen Millisekunden (< 5 oder kleiner 10 oder kleiner 20 ms), sodass im Falle einer Kollision in der Regel ausreichend schnell reagiert werden kann.

Die erfindungsgemäße Vorrichtung kann auch als Gurtkrafteinstelleinrichtung oder als Gurtkraftbegrenzer bezeichnet werden.

Der Begriff "Drehdämpfer" im Sinne der vorliegenden Erfindung bedeutet, dass sich Teile des Drehdämpfers im dämpfenden Betrieb gegeneinander drehen müssen. Hier bedeutet es, dass sich die mit dem magnetorheologischen Fluid benetzten Verdrängerkomponenten bei einer Dämpfung relativ zueinander drehen.

Das magnetorheologische Fluid ist in der Verdrängereinrichtung als Arbeitsfluid enthalten. Die Verdrängerkomponenten werden unmittelbar durch das magnetorheologische Fluid benetzt und sind in unmittelbaren Kontakt mit dem magnetorheologischen Fluid. Das bedeutet, dass die Verdrängerkomponenten das magnetorheologische Fluid als Arbeitsfluid verdrängen. Die Verdrängereinrichtung kann als Verdichter, Pumpe oder Zahnradpumpe ausgeführt sein, wobei die einzelnen Verdrängerkomponenten beispielsweise als Zahnkomponente, Zahnrad oder als Spindelschraube oder sonstige schrägverzahnte Zahnkomponente ausgeführt sein kann. Möglich sind auch andere kämmende Aussen- und Innenkonturen. Die ineinander eingreifenden Verdrängerkomponenten kämmen insbesondere miteinander.

In allen Ausgestaltungen ist es möglich, dass die Magnetfeldquelle oder wenigstens eine Magnetfeldquelle wenigstens einen zusätzlichen Dauermagneten aufweist. Ein solcher Dauermagnet erzeugt ein zeitlich konstantes Magnetfeld, welches durch ein Magnetfeld der elektrischen Spule überlagert und somit moduliert werden kann, um das effektiv wirkende Magnetfeld zu verringern oder zu verstärken. Dadurch ergibt sich die Möglichkeit, eine Grundkraft durch den Dauermagneten vorzugeben, wobei diese Grundkraft beispielsweise auch bei Ausfall der elektrischen Systeme erhalten bleibt.

In bevorzugten Weiterbildungen ist eine erste Verdrängerkomponente der Verdrängerkomponenten mit der Dämpferwelle fest verbunden. Eine zweite Verdrängerkomponente der Verdrängerkomponenten ist in einem Gehäuse der Verdrängereinrichtung drehbar aufgenommen. Dabei steht insbesondere die erste Verdrängerkomponente mit der zweiten Verdrängerkomponente im Eingriff und ist exzentrisch zu der zweiten Verdrängerkomponente angeordnet. Das bedeutet, dass die Drehachse der ersten Verdrängerkomponente exzentrisch zur Drehachse der zweiten Verdrängerkomponente angeordnet ist. Vorzugsweise ist die Dämpferwelle wenigstens abschnittsweise in einem Gehäuse des Drehdämpfers aufgenommen. Das Gehäuse des Drehdämpfers ist vorzugsweise auch das Gehäuse der Verdrängereinrichtung und kann aus einem Gehäuseteil oder aus mehreren Teilen bestehen.

In bevorzugten Ausgestaltungen weist die erste Verdrängerkomponente eine Außenverzahnung auf und die zweite Verdrängerkomponente weist eine Innenverzahnung auf. Dabei ist die zweite Verdrängerkomponente insbesondere (frei) drehbar in dem Gehäuse aufgenommen. Die erste Verdrängerkomponente kann in diesen Fällen auch als innere Verdrängerkomponente und die zweite Verdrängerkomponente kann als äußere Verdrängerkomponente bezeichnet werden.

Vorzugsweise ist ein Innenraum des Drehdämpfers einem wesentlichen Teil des Magnetfeldes der Magnetfeldquelle aussetzbar. Dabei ist in dem Innenraum des Drehdämpfers und insbesondere des Gehäuses des Drehdämpfers wenigstens zum Teil das magnetorheologische Fluid enthalten. Dadurch wirkt das Magnetfeld der Magnetfeldquelle direkt auf das in dem Innenraum des Drehdämpfers enthaltene magnetorheologische Fluid ein, sodass das magnetorheologische Fluid als Arbeitsfluid eine Drehbewegung der mit dem magnetorheologischen Fluid benetzten Verdrängerkomponenten beeinflusst.

In vorteilhaften Ausgestaltungen umfasst der Drehdämpfer wenigstens einen dem Magnetfeld der Magnetfeldquelle aussetzbaren Dämpfungskanal. Insbesondere umfasst der Drehdämpfer wenigstens einen Dämpfungskanal im Inneren des Gehäuses der Verdrängereinrichtung bzw. des Drehdämpfers. Ein im inneren angeordneter Dämpfungskanal ermöglicht eine besonders kompakte Konstruktion und Ausgestaltung und somit Einwirkung des Magnetfeldes auf das in dem Dämpfungskanal enthaltene magnetorheologische Fluid. Der Dämpfungskanal kann als Dämpfungsspalt ausgebildet sein oder wenigstens einen solchen umfassen.

In bevorzugten Weiterbildungen ist ein Dämpfungsspalt als Dämpfungskanal radial zwischen der zweiten Verdrängerkomponente und dem Gehäuse angeordnet. Möglich sind auch mehrere Dämpfungsspalte. Besonders bevorzugt kann der Dämpfungsspalt als eine Art Ringspalt oder Ringkanal ausgebildet sein, der sich radial zwischen der zweiten Verdrängerkomponente und dem Gehäuse insbesondere um die zweite Verdrängungskomponente herum erstreckt. Dabei kann der Dämpfungsspalt in mehrere Segmente unterteilt sein. Vorzugsweise ist der Dämpfungsspalt oder wenigstens ein Dämpfungsspalt gezielt mit dem Magnetfeld beaufschlagbar.

In bevorzugten Weiterbildungen ist der Dämpfungsspalt wenigstens einem wesentlichen Teil des Magnetfeldes der Magnetfeldquelle aussetzbar. Das bedeutet, dass das Magnetfeld bzw. die Magnetfeldlinien des Magnetfeldes zu einem wesentlichen Teil den Dämpfungsspalt durchtreten und somit effektiv auf das darin enthaltene magnetorheologische Fluid einwirken. Durch eine Variation des auf den Dämpfungsspalt einwirkenden Magnetfeldes kann somit effektiv die maximal durch den Gurt auf einen Insassen einwirkende Kraft beeinflusst werden.

In vorteilhaften Weiterbildungen wird die zweite Verdrängerkomponente in dem Gehäuse über eine Mehrzahl an Führungseinheiten drehbar geführt, um einen definierten Dämpfungsspalt zwischen der zweiten Verdrängerkomponente und dem Gehäuse zu gewährleisten. Die zweite Verdrängerkomponente ist insbesondere im Wesentlichen als ein außenzylindrisches Teil ausgebildet, welches innen hohl ausgebildet ist und dort eine Innenverzahnung aufweist, die mit der Außenverzahnung der ersten Verdrängerkomponente kämmt. Über die Mehrzahl an Führungseinheiten wird die zweite Verdrängerkomponente definiert in dem Gehäuse geführt und es wird eine definierte radiale Ausdehnung des Dämpfungsspalts gewährleistet. Dabei ist es möglich, dass der zum Beispiel als Ringspalt ausgebildete Dämpfungsspalt durch die Führungseinheiten in mehrere Spaltsegmente bzw. Winkelsegmente unterteilt wird.

Die Führungseinheiten können als Gleiteinheiten oder als Lagereinheiten ausgebildet sein und sind insbesondere gleichmäßig oder wenigstens im Wesentlichen gleichmäßig oder symmetrisch über dem Umfang verteilt angeordnet. Die Führungseinheiten können jeweils als eine Art von Gleitstein ausgebildet sein und aus Messing, Bronze oder Ähnlichem bestehen. Die Führungseinheiten können beispielsweise etwa zylindrisch ausgebildet sein, wobei eine und insbesondere die radial äußere Seite stärker abgeflacht sein kann kommen, um besser an die Innenkontur des Gehäuses angepasst zu sein.

Derartige Führungseinheiten gewährleisten definierte Bedingungen an dem Dämpfungsspalt und wirken sich nicht oder nur sehr moderat auf die Grundreibung aus. Die Verdrängerkomponenten drehen sich insbesondere im Betrieb.

In vorteilhaften Ausgestaltungen weist das Gehäuse einen ersten und einen zweiten Endbereich und dazwischen einen Mittelbereich auf. Dabei ist in wenigstens einem der beiden Endbereiche eine elektrische Spule aufgenommen. Eine Achse der Spule ist insbesondere im Wesentlichen parallel zu der Dämpferwelle ausgerichtet. Die Achse der Spule kann beispielsweise eine Symmetrieachse der Spule sein oder kann beispielsweise senkrecht auf einer Querschnittsfläche der Spule ausgerichtet sein. Vorzugsweise weist wenigstens ein Endbereich eine daran zugängliche und insbesondere daraus herausgeführte Dämpferwelle auf. In bevorzugten Weiterbildungen wird die Dämpferwelle nur an einem Endbereich aus dem Gehäuse herausgeführt bzw. ist daran zugänglich. Es ist möglich und bevorzugt, dass jeder Endbereich ein separates Teil ist, sodass in bevorzugten Ausgestaltungen das Gehäuse aus einem ersten Endteil und einem zweiten Endteil und gegebenenfalls einem dazwischen angeordneten Mittelteil (oder zwei oder mehr Mittelteilen oder Gehäuseteilen dazwischen) besteht.

In besonders bevorzugten Weiterbildungen besteht das Gehäuse wenigstens zu einem wesentlichen Teil und insbesondere im Wesentlichen oder nahezu vollständig oder vollständig aus einem magnetisch leitenden Material mit einer relativen Permeabilität größer 100. Insbesondere ist die relative Permeabilität größer als 500 und besonders bevorzugt größer als 1000.

Besonders bevorzugt umfasst das Gehäuse an die Verdrängerkomponenten angrenzende Gehäuseabschnitte. Die Gehäuseabschnitte sind an den Stirnseiten der Verdrängerkomponenten (gegenüber voneinander) angeordnet und grenzen jeweils axial an die (seitlichen Enden der) Verdrängerkomponenten an bzw. sind durch einen geringen Axialspalt von den Verdrängerkomponenten getrennt. Der Axialspalt erstreckt sich in radiale Richtung. Der Axialspalt weist vorzugsweise eine Breite in axialer Richtung auf, die größer ist als eine typische Größe der größten (Carbonyleisen-) Partikel innerhalb des magnetorheologischen Fluids (MRF). Dadurch wird sicher gestellt, dass ein Verklemmen, ein Festfressen/- setzen oder dergleichen der Verdrängerkomponente an dem Gehäuseabschnitt nicht auftritt, da in den Axialspalt eindringende (Eisen- oder Carbonyleisen-) Partikel einen geringeren Außendurchmesser als die Spaltbreite aufweisen. Vorzugsweise ist die axiale Breite des Axialspaltes größer als 5 µm und insbesondere größer als 10 µm oder als 20 µm.

Besonders bevorzugt besteht wenigstens einer dieser Gehäuseabschnitte im Bereich des Axialspaltes aus einem magnetisch leitenden Material.

Vorzugsweise ist axial benachbart zu der elektrischen Spule in dem Gehäuse ein Ring aus einem Material mit einer relativen Permeabilität kleiner 10 angeordnet. Der Ring ist insbesondere axial zwischen der elektrischen Spule und den Verdrängerkomponenten angeordnet. Besonders bevorzugt befindet sich der Ring und/oder die elektrische Spule im Wesentlichen oder nahezu vollständig oder vollständig radial weiter außen als der sich zwischen der Verdrängerkomponente und dem Gehäuseabschnitt befindende Axialspalt. Unter "nahezu vollständig" wird hier verstanden, dass der Anteil radial außerhalb größer als 80% und insbesondere größer 90% beträgt. Besonders bevorzugt befindet sich der Ring axial benachbart und angrenzend an ein Mittelteil des Gehäuses. Besonders bevorzugt ist die relative Permeabilität des Ringmaterials kleiner als 5 und vorzugsweise kleiner als 2. Damit besteht der Ring praktisch aus einem magnetisch nicht leitenden Material. Geeignete Materialien können beispielsweise austenitische Stähle sein. Der Ring aus einem Material mit einer geringen magnetischen Permeabilität verhindert einen magnetischen Kurzschluss. Der Ring kann einteilig sein oder auch mehrteilig. Möglich sind auch mehrere Ringe, die parallel zueinander oder ineinander verschachtelt vorgesehen sind. Es ist auch möglich, dass der Ring einen Hohlraum darstellt, der beispielsweise mit einem Medium wie Luft gefüllt ist. Möglich ist es auch, dass in Umfangsrichtung der Ring aus mehreren Segmenten besteht, die beispielsweise durch dünne Wände voneinander getrennt sind. Je nach Wandstärke der Wand ist es möglich, diese Wände aus einem Material mit einer größeren Permeabilität herzustellen, solange insgesamt gewährleistet ist, dass ein magnetischer Kurzschluss verhindert wird.

Gemäß der Erfindung durchtritt ein wesentlicher Teil des Magnetfeldes der Magnetfeldquelle einen bzw. den Axialspalt zwischen dem Gehäuse und wenigstens einer der Verdrängerkomponenten. Das bedeutet, dass der Axialspalt dem Magnetfeld ausgesetzt ist. Dadurch kann auch der Axialspalt zwischen der Verdrängerkomponente (den Verdrängerkomponenten) und dem Gehäuse zur Beeinflussung der Kraft des Gurtes eingesetzt werden. Ein solcher Axialspalt ist in der Regel bautechnisch nötig, damit eine Verschluss- und/oder reibungsarme Drehung der Verdrängerkomponenten gegenüber dem Gehäuse ermöglicht wird. Durch den Einsatz des Magnetfeldes kann auch der Axialspalt zur Erzeugung des gewünschten Drehmoments des herangezogen werden. Außerdem wird wein Druckverlust innerhalb des Axialspaltes durch überströmendes magnetorheologisches Fluid verhindert.

In allen Ausgestaltungen ist es bevorzugt, das magnetorheologische Fluid durch Drehbewegung der ineinander eingreifenden Verdrängerkomponenten von einem Einlass der Verdrängereinrichtung zu einem Auslass der Verdrängereinrichtung zu fördern. Dabei ist es möglich, dass wenigstens ein Drucksensor mit dem Einlass und/oder dem Auslass verbunden ist. Besonders bevorzugt wird an der Einlassseite, also der Saugseite, die Dämpferwelle aus dem Gehäuse herausgeführt. Vorzugsweise ist zwischen der Dämpferwelle und dem Gehäuse wenigstens eine Dichtung vorgesehen. Die Dämpferwelle kann an dem Gehäuse gelagert sein.

Es ist in allen Ausgestaltungen möglich, dass der Einlass und der Auslass auf der gleichen Seite liegen. Bei kleinen oder sogar kleinsten Rillen oder Ungenauigkeiten kann aber ein Überströmen über den kleinen Zwischensteg stattfinden. Deshalb ist es günstiger, die Öffnungen für Einlass und Auslass auf verschiedene Stirnseiten zu legen, auch wenn die verbleibenden Axialspalte über das magnetorheologische Fluid (MRF) abgedichtet werden. Vorzugsweise werden die Axialspalte an beiden Stirnenden über das magnetorheologische Fluid (MRF) abgedichtet.

In einer vorteilhaften Weiterbildung sind der Einlass und der Auslass auf unterschiedlichen axialen Seiten der Verdrängereinrichtung angeordnet. Dadurch wird eine räumliche Trennung von Einlass und Auslass realisiert, was die Abdichtung erleichtert und Druckverluste durch einen unerwünschten und dichten Übertritt des verdrängten magnetorheologischen Fluids von dem Auslass zu dem Einlass effektiv verhindert. Möglich ist aber auch ein konventioneller Aufbau, bei dem der Einlass und der Auslass auf der gleichen axialen Seite der Verdrängereinrichtung angeordnet sind, wobei der Einlass und der Auslass beispielsweise nierenförmig ausgebildet sind und zwischen dem Einlass und dem Auslass entsprechende Dichtungsmaßnahmen ergriffen werden. Bei einer solchen Ausgestaltung ist wenigstens ein externer Dämpfungskanal außerhalb der Verdrängereinrichtung bevorzugt.

Vorzugsweise ist das Magnetfeld in einem Bereich des Einlasses schwächer ausgebildet als in einem Bereich des Auslasses. Dafür kann durch geeignete Konstruktionsmaßnahmen gesorgt werden. Durch ein schwächeres Magnetfeld im Bereich des Einlasses, also auf der Saugseite kann eine Kavitation innerhalb des magnetorheologischen Fluides noch besser verhindert werden.

In vorteilhaften Weiterbildungen aller Ausgestaltungen ist es bevorzugt, dass funktional zwischen dem Drehdämpfer und der Gurtrolle eine Art Kupplung vorgesehen ist. Die Kupplung kann beispielsweise als Fliehkraftkupplung ausgebildet sein oder auf einem anderen Wirkprinzip beruhen. Dadurch wird bei langsamen Bewegungen des Sicherheitsgurts nur eine geringe Betätigungskraft nötig, während bei schnellen Bewegungen des Sicherheitsgurts die Kupplung einkuppelt und somit der Drehdämpfer aktiviert wird.

In allen Ausgestaltungen ist es bevorzugt, wenigstens ein Ausgleichsvolumen vorzusehen, um beispielsweise einen Temperaturausgleich zu ermöglichen. Das Ausgleichsvolumen kann beispielsweise aus einer Luftblase oder einem anderen komprimierbaren Material bestehen. Das Ausgleichsvolumen wird vorzugsweise auf der Ansaugseite angeordnet, da dort ein niedrigeres Druckniveau anliegt. Auf der Ansaugseite kann das Magnetfeld schwächer sein, damit keine Kavitation beim Ansaugen entsteht. Zwar handelt es sich um einen geschlossenen Kreislauf, aber bei Temperaturänderungen, Dehnungen erhöht dies die Sicherheit.

Vorzugsweise ist wenigstens ein externes Dämpfungsventil mit einem Ventilkanal als Dämpfungskanal vorgesehen. Das externe Dämpfungsventil kann einen zusätzlichen Dämpfungskanal zur Verfügung stellen. Möglich ist es aber auch, dass an dem externen Dämpfungsventil der einzige Dämpfungskanal bzw. die einzigen Dämpfungskanäle ausgebildet sind. Ein externes Dämpfungsventil bietet größere konstruktive Freiheiten. Ein Drehdämpfer ohne externes Dämpfungsventil bietet eine kompakte Bauform und einen kostengünstigen Aufbau.

Vorzugsweise ist wenigstens ein Winkelsensor vorhanden, der ein Maß für eine Winkelposition der Dämpferwelle erfasst. Ein solcher Winkelsensor kann zum Beispiel als Absolutdrehwinkelgeber ausgebildet sein. Möglich sind auch andere Sensorarten (z.B Kraftsensoren, Beschleunigungssensoren...).

In allen Ausgestaltungen ist es möglich, dass der Drehdämpfer mit einem Elektromotor zum Abwickeln und oder Aufwickeln des Sicherheitsgurts gekoppelt ist. In allen Fällen ist auch der Einsatz eines Vorsatzgetriebes möglich.

In allen Ausgestaltungen ist es möglich, dass der Drehdämpfer an einem beliebigen Gurtumlenkpunkt angeordnet ist (z.B. in der B-Säule auf der Schulterhöhe; Oberkante Sitzbank in Font). In allen Fällen ist auch der Einsatz eines Vorsatzgetriebes oder einer kraft- oder formschlüssigen Verbindung mit dem Gurt möglich.

Über einen Elektromotor kann beispielsweise auch im Falle einer Kollision der Sicherheitsgurt vorgespannt werden. Möglichst ist aber auch der Einsatz anderer Vorspannmechanismen, wie zum Beispiel der Einsatz eines geeigneten Sprengsatzes, um eine effektive Vorspannung des Sicherheitsgurts in einem Kollisionsfall zu erzielen oder eines thermischen Aktors (Formgedächtnis). Ein ganz erheblicher Vorteil ist, dass der Elektromotor nur ein erheblich geringeres Drehmoment aufbringen können muss als der Drehdämpfer abbremsen können muss. Dadurch kann ein Elektromotor eingesetzt werden, der gegebenenfalls über ein Vorsatzgetriebe direkt an den Drehdämpfer gekoppelt wird. Der Elektromotor und auch das Vorsatzgetriebe können kostengünstig ausgeführt werden, da sie für geringe Belastungen ausgelegt sind. Der Drehdämpfer hingegen eignet sich für erheblich höhere Abbremsmomente und kann ebenfalls kostengünstig realisiert werden. Die entstehenden Gesamtkosten sind viel geringer als bei Ausführung mit einem Elektromotor, der das Aufwickeln und auch das Abbremsen kann.

Insbesondere bei Einsatz eines Elektromotors ist es auch möglich, wenigstens einen externen hydraulischen Aktor in Fluidverbindung mit der Verdrängereinrichtung anzuordnen. Ein solcher Aktor kann durch Betätigung der als Pumpe wirkenden Verdrängereinrichtung beispielsweise ausgefahren oder eingefahren werden. Wenigstens in eine Wirkrichtung kann beispielsweise eine Vorbelastung durch eine Feder erfolgen, sodass eine Rückstellung automatisch erfolgen kann.

In allen Ausgestaltungen ist es bevorzugt, dass wenigstens ein Insassensensor zur Erfassung wenigstens einer Position und/oder eines Gewichts und/oder eines Körperbaus und/oder eines Alters eines Insassen vorgesehen ist. Vorzugsweise ist die Steuereinrichtung dazu ausgebildet und eingerichtet, den Drehdämpfer in Abhängigkeit von der wenigstens einen erfassten Messgröße zu steuern. Beispielsweise kann ein Insassensensor einen Abstand zu Einrichtungen im Innenraum eines Kraftfahrzeuges detektieren und in Abhängigkeit von dem ermittelten Abstand die Kraft des Sicherheitsgurts entsprechend einstellen, sodass einerseits der zur Verfügung stehende Abstand vernünftig ausgenutzt wird, während andererseits die Belastung auf den Insassen durch den Sicherheitsgurt reduziert wird. Bevorzugt ist auch die Berücksichtigung des Gewichts eines Insassen.

Das erfindungsgemäße Verfahren dient zur Beeinflussung einer Kraft eines Sicherheitsgurtes auf zum Beispiel einen Insassen eines Personentransportmittels insbesondere bei einer Kollision. Dabei wird ein Maß für eine durch den Sicherheitsgurt auf den Insassen wirkende Belastung ermittelt und danach wird ein Magnetfeld einer Magnetfeldquelle in Abhängigkeit von dem ermittelten Maß in einem ein magnetorheologisches Dämpfungsfluid als Arbeitsfluid aufweisenden Dämpfungskanal eines Drehdämpfers eingestellt. Dadurch kann eine Drehbewegung einer Dämpferwelle des Drehdämpfers beim Auf- oder Abwickeln des Sicherheitsgurts gedämpft werden. Die Dämpferwelle ist wenigstens abschnittsweise in einem Gehäuse des Drehdämpfers aufgenommen und ein wesentlicher Teil des Magnetfeldes der Magnetfeldquelle durchtritt einen bzw. den Axialspalt zwischen dem Gehäuse und wenigstens einer der Verdrängerkomponenten.

Auch das erfindungsgemäße Verfahren hat viele Vorteile, da es eine individuelle und in Echtzeit erfolgende Beeinflussung der Kraft eines Sicherheitsgurtes auf einen Insassen ermöglicht. Dabei kann innerhalb weniger Millisekunden (kleiner 5 oder 10 oder 20 ms) die Kraft des Sicherheitsgurts eingestellt werden.

In allen Ausgestaltungen sind die Spaltmaße bei der Verdrängereinrichtung vorzugsweise größer als bei konventionellen Verdrängereinrichtungen aus dem Stand der Technik, die nicht mit einem magnetorheologischen Fluid als Arbeitsfluid betrieben werden. So kann ein Axialspalt zwischen den rotierenden Verdrängerkomponenten und dem Gehäuse von der Verdrängereinrichtung beispielsweise >0,02 mm sein und in bevorzugten Ausgestaltungen bei 0,03 mm liegen. Der radiale Spalt zwischen der zweiten Verdrängerkomponente bzw. der äußeren Verdrängerkomponente und dem Innenumfang des Gehäuses der Verdrängereinrichtung kann >0,05 mm sein und liegt insbesondere zwischen etwa 0,05 mm und 0,5 mm, vorzugsweise zwischen etwa 0,01 mm und 0,4 mm. Gute Ergebnisse wurden mit einem Spalt von etwa 0,25 mm erzielt. Vorzugsweise ist jeder Spalt größer als 0,01 mm und vorzugsweise größer als 0,015 mm und insbesondere größer als 0,02 mm.

Durch das Magnetfeld der Magnetfeldquelle wird vorzugsweise ein Großteil der enthaltenen Spalte magnetisierten, sodass dort die Eisenpartikel des magnetorheologischen Fluides ausgerichtet werden und eine zusätzliche Dichtwirkung und eine zusätzliche Dämpfung übernehmen können.

Der Kraftverlauf kann stufenlos, variabel und sehr schnell über den Strom der elektrischen Spule eingestellt werden. Die gesamte Magnetisierung kann bereits in der Verdrängereinrichtung selbst erfolgen. Dann ist eine sehr platzsparende Konstruktion möglich. Die stufenlose Regelung der Ventileinheiten kann von 0 bis 100 % im Bereich von wenigen Millisekunden erfolgen, wodurch eine hohe Systemdynamik ermöglicht wird.

In einer speziellen Ausgestaltung konnte schon mit einer elektrischen Leistung von 3 W ein Bremsmoment von 20 Newtonmeter bei einer Stromstärke von 1,1 A erzielt werden. Entsprechend skaliert sind viel größere Momente erzielbar.

In allen Ausgestaltungen werden die Verdrängereinrichtung und insbesondere die erste und die zweite Verdrängerkomponente aus einem magnetisch leitenden Material wie beispielsweise ST37 oder S235 hergestellt. Werden die Verdrängerkomponenten als Zahnkomponenten ausgebildet, so ist die Zähnezahl der inneren Verdrängerkomponente vorzugsweise kleiner als die Zähnezahl der äußeren Verdrängerkomponente. Möglich und bevorzugt ist ein Unterschied von einem Zahn zwischen der inneren und der äußeren Verdrängerkomponente.

Es ist möglich, die miteinander kämmenden Komponenten bzw. die einer erhöhten Belastung ausgesetzten Komponenten durch beispielsweise Hartchromschichten oder andere Oberflächenschichten oder durch Erhöhung der Oberflächenhärte härter auszugestalten, um eine höhere Standzeit zu erreichen.

Ein erheblicher Vorteil der Erfindung besteht auch darin, dass die Anzahl der Umdrehungen des Drehdämpfers grundsätzlich unbegrenzt ist. Während bei einem Torsionsstab aus dem Stand der Technik nur eine begrenzte Anzahl von Umdrehungen möglich ist, um die Gurtkraft zu begrenzen, kann bei der Erfindung grundsätzlich eine unbegrenzte Anzahl von Umdrehungen des Drehdämpfers erfolgen, um die Kraft des Sicherheitsgurts zu jedem Zeitpunkt optimal einzustellen. So kann praktisch der gesamte Gurtweg freigegeben werden, wenn es denn im Kollisionsfall sinnvoll erscheint.

Durch die Berücksichtigung beispielsweise des Gewichts oder des Körperbaus des Insassen kann individuell auf die Eigenschaften des Insassen reagiert werden, sodass der zur Verfügung stehende maximale Weg optimal ausgenutzt werden kann.

Somit kann die von dem Sicherheitsgurt auf den Insassen wirkende Rückhaltekraft durch die erfindungsgemäße Vorrichtung jederzeit auf die biomechanisch ertragbaren Grenzwerte reduziert werden. Dadurch können beispielsweise Rippenbrüche verhindert werden oder es kann dafür gesorgt werden, dass der Kopfnickwinkel bestimmte Grenzwerte nicht überschreitet, sofern dies im Kollisionsfall überhaupt möglich ist. Durch die Erfindung können angepasste Rückhaltekräfte die Insassenbelastungen im Kopf und Brustbereich zum Beispiel reduzieren. Die Erfindung ermöglicht ein adaptives Rückhaltesystem des Sicherheitsgurts, welches beispielsweise für Fahrer und Beifahrer unterschiedlich ausgelegt ist, da durch das fehlende Lenkrad auf der Beifahrerseite in der Regel mehr Vorverlagerungsweg vorhanden ist.

In konkreten Ausgestaltungen können am Sicherheitsgurt Kräfte im Bereich von 2000 Nm bis 6000 Nm benötigt werden, was am Gurtaufroller Momente bis 100 Newtonmeter erfordert. Dabei können hohe Drehzahlen bis 6000 Umdrehungen/min auftreten.

Konventionelle magnetorheologische Kupplungen aus dem Stand der Technik beherrschen diese Drehzahlen nicht, da dort das magnetorheologische Fluid in dessen Bestandteile zentrifugiert werden würde. Hier arbeitet das magnetorheologische Fluid direkt als Arbeitsfluid. Eine Gefahr der Zentrifugierung tritt nicht auf.

Dadurch, dass bei der Verdrängereinrichtung größere Spalte in radialer und axialer Richtung möglich sind, wird ein weiterer Vorteil erzielt, da die Grundreibung ohne Magnetfeld erheblich geringer ist als bei konventionellen Verdrängereinrichtungen, die mit einem Hydrauliköl betrieben werden. Dort werden, um Druckverluste zu vermeiden, kleine Spalte eingesetzt. Bei der Verdrängereinrichtung der vorliegenden Erfindung können die Spalte, die in axialer und radialer Richtung mit dem Magnetfeld beaufschlagt werden, größer gewählt werden, da eine automatische Abdichtung und Verkettung der magnetorheologischen Partikel erfolgt. Dadurch wird bei Beaufschlagung mit einem Magnetfeld ein hohes Bremsmoment erzeugt, während nach Abschaltung des Magnetfeldes oder nach Reduzierung des Magnetfeldes durch die großen Spaltmaße bedingt nur eine sehr geringe Grundreibung vorliegt. Die Axialspalte und insbesondere auch die radialen Spalte werden vorzugsweise quer zu ihrer Längserstreckung von einem wesentlichen Teil des Magnetfeldes durchtreten. Insbesondere verläuft das Magnetfeld wenigstens zu einem erheblichen Teil nahezu senkrecht oder senkrecht zu der Längserstreckung wenigstens eines Axialspaltes und/oder wenigstens eines Radialspaltes.

Vorzugsweise wird mit der Vorrichtung bei einer Kollision der Sicherheitsgurt gestrafft. Dazu wird der Sicherheitsgurt innerhalb kurzer Zeit von ca. 5 ms bis 20 ms um bis zu 15 cm oder sogar 30 cm angezogen. Das ist insbesondere dann sinnvoll, wenn dicke Kleidung ein straffes Anliegen des Gurtes am Körper verhindert. Dabei kann der Gurtstraffer zum Beispiel im Gurtaufroller bzw. an der Gurtrolle integriert sein. Möglich ist auch eine Anordnung unterhalb des Gurtschlosses und/oder an der Verankerung des Sicherheitsgurts an der Karosserie. Als Energielieferant kann beispielsweise eine gespannte Feder oder eine kleine Sprengladung verwendet werden. Möglich ist auch eine Straffung über einen Elektromotor. Es ist bevorzugt, dass die Zeitdauer zur Einstellung eines bestimmten Magnetfeldes <100 ms und insbesondere <20 ms und vorzugsweise kleiner als 10 ms beträgt. Vorzugsweise wird bei der Vorrichtung keine separate Kühlung benötigt. Insbesondere ist es möglich, die Vorrichtung unterzudimensionieren, da ein dauernder Betrieb der Gurtrolle in der Regel nicht vorgesehen ist.

In allen Ausgestaltungen liegt vorzugsweise ein geschlossener Kreislauf für das magnetorheologische Fluid vor. Der geschlossene Kreislauf kann innerhalb der Verdrängereinrichtung vorliegen. Möglich ist aber auch, dass eine Fluidleitung aus dem Inneren der Verdrängereinrichtung herausführt, über ein Ventil geführt und wieder in die Verdrängereinrichtung eingeführt wird. Mit dem Drehdämpfer wird eine Drehbewegung der Gurtrolle gedämpft bzw. gebremst.

In allen Ausgestaltungen ist es möglich, durch den Betrieb der Verdrängereinrichtung verursachte Druckschwankungen mit der Steuerung technisch auszugleichen, in dem das Magnetfeld entsprechend zeitlich gesteuert wird. Dies ist möglich, da das magnetorheologische Fluid auf Magnetfeldänderungen in kürzester Zeit reagiert.

Es ist möglich und bevorzugt, dass der Sicherheitsgurt auch mit dem Drehdämpfer vorgespannt wird, wenn zum Beispiel ein Sprengsatz, ein Elektromotor oder ein Druckbehälter als Druckspeicher umfasst ist. Dabei kann die Vorspannkraft mittels des Drehdämpfers variiert werden. Die Vorspannung wird vorzugsweise so gewählt, dass diese mehrmals (hintereinander) möglich ist (Pre-Safe).

In allen Ausgestaltungen können die von der Verdrängereinrichtung erzeugten Druckschwankungen über eine Regelung der Magnetfeldstärke der Magnetfeldquelle geglättet werden. Solche Druckschwankungen können entstehen, da kein konstanter Volumenstrom durch das Zahnprofil der Verdrängerkomponenten vorliegt.

Es ist bevorzugt, die Vorrichtung mit einem Computer wie zum Beispiel dem Bordcomputer zu vernetzen, um Daten zwischen verschiedenen Rückhaltesystemen, vorzugsweise in Echtzeit und während dem Unfall (Crash), auszutauschen, Einstellungen zu protokollieren oder auch Einstellungen vorzunehmen (z.B. Anpassung des Airbagzündpunktes oder der Airbagintensität z.B. abhängig von der Istsituation während des Crashs/Kollision). Ein Update über ein gesichertes Netzwerk oder das Internet ist möglich. So können neue Kennlinien eingespielt werden.

Die Erfindung stellt eine Vorrichtung zur Beeinflussung der Kraft eines Sicherheitsgurtes zur Verfügung, mit der der Kraftverlauf stufenlos, variabel und sehr schnell über den Strom geregelt werden kann.

Weitere Vorteile und Merkmale der vorliegenden Erfindung ergeben sich aus der Beschreibung der Ausführungsbeispiele, die mit Bezug auf die beiliegenden Figuren im Folgenden erläutert werden.

In den Figuren zeigen:
- Fig. 1: eine schematische perspektivische Ansicht einer erfindungsgemäßen Vorrichtung;
- Fig. 2: einen Schnitt durch die Vorrichtung nach Figur 1;
- Fig. 3: einen Teilschnitt durch den Drehdämpfer der Vorrichtung nach Figur 1;
- Fig. 3b: eine schematische Draufsicht auf einen Endbereich des Gehäuses des Drehdämpfers nach Figur 1;
- Fig. 4: eine Explosionsdarstellung des Drehdämpfers aus Figur 3;
- Fig. 5: die Darstellung gemäß Figur 4 mit eingezeichneten Magnetfeldlinien;
- Fig. 6: einen weiteren Drehdämpfer für eine erfindungsgemäße Vorrichtung in einem schematischen Schnitt; und
- Fig. 7: ein weiteres Ausführungsbeispiel einer erfindungsgemäßen Vorrichtung in einer schematischen Darstellung.

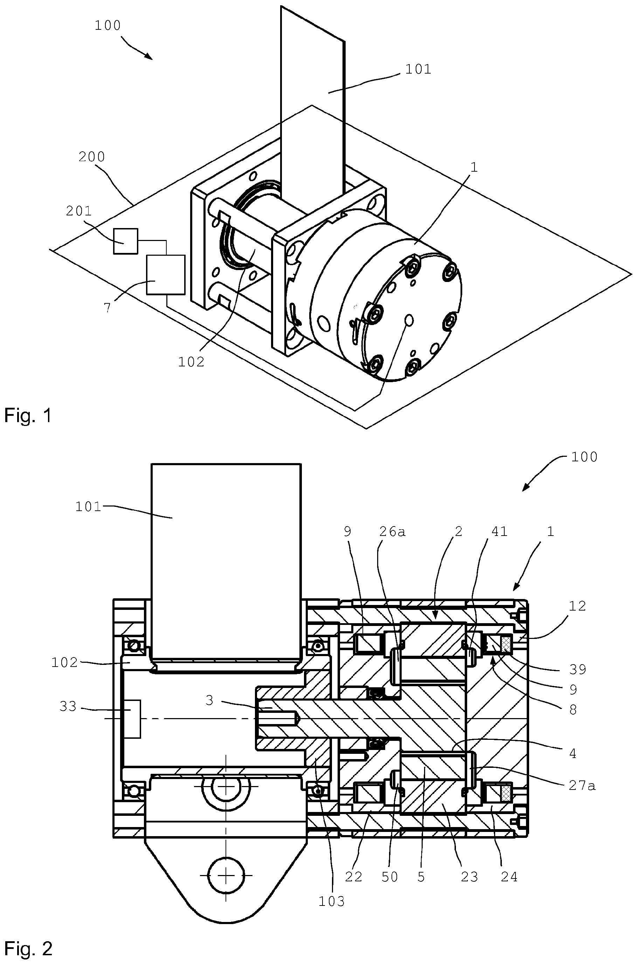

Figur 1 zeigt eine schematische perspektivische Darstellung einer erfindungsgemäßen Vorrichtung 100, die an einem Personentransportmittel 200 befestigt ist. Die Vorrichtung 100 umfasst hier einen Gurtaufroller mit einer Gurtrolle 102, auf dem ein Sicherheitsgurt 101 aufgerollt ist. Zur Einstellung der auf einen Insassen einwirkenden Kraft durch den Sicherheitsgurt 101 ist der Drehdämpfer 1 vorgesehen, der über eine interne oder externe Steuereinrichtung 7 gesteuert wird. Die Steuereinrichtung 7 kann über interne Sensoren verfügen und kann auch mit externen Sensoren 201 verbunden sein. Ein solcher externer Sensor 201 kann beispielsweise ein Insassensensor sein, der Eigenschaften des Insassen oder dessen momentane Position etc. erfasst. In Abhängigkeit von den sensorisch erfassten Daten wird wenigstens im Kollisionsfall ein Bremsmoment an dem Drehdämpfer 1 eingestellt, um die Gurtkraft auf einen Insassen wie gewünscht einzustellen.

Figur 2 zeigt die Vorrichtung 100 aus Figur 1 im Schnitt. Die Vorrichtung 100 umfasst den Drehdämpfer 1 und den Gurtaufroller mit der Gurtrolle 102. An der Gurtrolle 102 kann beispielsweise ein Belastungssensor 33 angeordnet sein, der ein Maß für eine Belastung des Sicherheitsgurts 101 auf einen Insassen erfasst, sodass die Steuereinrichtung 7 in Abhängigkeit auch von den Messdaten des Belastungssensors 33 ein geeignetes Bremsmoment einstellen kann.

Der Drehdämpfer 1 weist ein Gehäuse 12 auf, dass hier Teil der Verdrängereinrichtung 2 ist bzw. dessen Gehäuse bildet. Im Inneren der Verdrängereinrichtung 2 ist eine Dämpferwelle 3 angeordnet, die mit der Gurtrolle 102 über eine Kupplung 103 koppelbar ist. Die Kupplung 103 kann im normalen Fahrbetrieb eines als Kraftfahrzeug ausgebildeten Personentransportmittels 200 eine freie Drehbewegung der Gurtrolle 102 ermöglichen, um eine geringe Betätigungskraft zur Verfügung zu stellen. Im Falle einer Kollision koppelt die Kupplung 103 ein, sodass der Drehdämpfer 1 drehfest mit der Gurtrolle 102 gekoppelt ist.

Hier ist die Dämpferwelle 3 fest mit der ersten bzw. inneren Verdrängerkomponente 4 gekoppelt und hier einstückig gefertigt. Die erste Verdrängerkomponente 4 weist eine Außenverzahnung 11 auf, die mit einer Innenverzahnung 13 der zweiten Verdrängerkomponente 5 kämmt.

Die zweite Verdrängerkomponente 5 weist eine im Wesentlichen zylindrische Außenform auf und ist in dem Gehäuse 12 aufgenommen. Beide Verdrängerkomponenten 4 und 5 erstrecken sich hier über die gleiche axiale Breite.

In dem Gehäuse 12 ist wenigstens eine Magnetfeldquelle 8 angeordnet, die eine elektrische Spule 9 umfasst. Hier sind in dem Gehäuse zwei elektrische Spulen 9 vorgesehen, deren Magnetfelder zur Beeinflussung des im Inneren der Verdrängereinrichtung vorhandenen magnetorheologischen Fluides dienen. Hier werden mit den Magnetfeldern der elektrischen Spulen 9 beide stirnseitigen Axialspalte 25 abgedichtet.

Möglich ist es auch, dass zusätzlich zu einer (bzw. jeder) elektrischen Spule 9 auch beispielsweise noch ein Dauermagnet 39 vorgesehen wird, der ein statisches Magnetfeld erzeugt, welches durch die elektrische Spule 9 moduliert werden kann.

Um einen Ausfall des Systems beispielsweise bei Stromverlust zu verhindern, kann ein elektrischer Kondensator oder eine andere lokale Energiequelle oder ein Energiespeicher an oder in dem Drehdämpfer bzw. an oder in der Vorrichtung 100 vorgesehen sein. Damit kann auch bei einem Ausfall der elektrischen Systeme des Personentransportmittels noch genügend Energie bevorratet werden, um eine zuverlässige Funktion der Vorrichtung 100 zu gewährleisten.

Möglich ist es auch, dass das Magnetfeld eines Dauermagneten 39 so stark dimensioniert ist, dass auch bei Ausfall der lokalen elektrischen Komponenten ein ausreichend hohes Bremsmoment an der Vorrichtung 100 bereitgestellt wird, sodass im Kollisionsfall eine ausreichend starke Rückhaltekraft des Sicherheitsgurts 101 erzielt wird. Durch die elektrische Spule 9 kann ein entsprechend entgegengepoltes Magnetfeld (oder gleichgerichtetes Magnetfeld) eingestellt werden, um das insgesamt wirkende Magnetfeld der Magnetfeldquelle 8 zu modellieren. Dadurch kann dann zu jedem Zeitpunkt ein optimales Magnetfeld eingestellt und das Magnetfeld des Dauermagneten 39 gezielt verstärkt oder geschwächt werden.

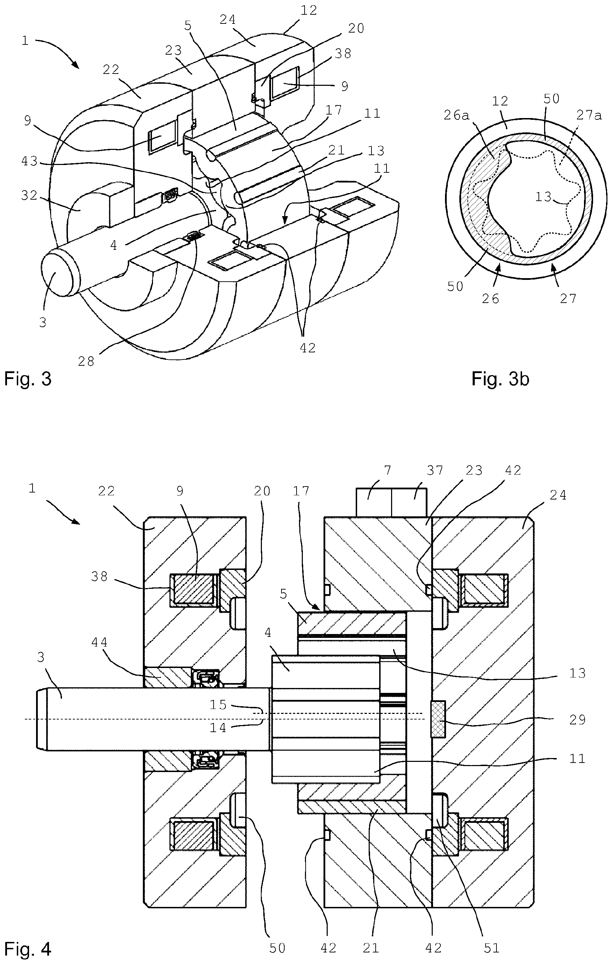

Figur 3 zeigt einen Teilschnitt des Drehdämpfers 1 aus Figur 2, wobei die Außenverzahnung 11 der ersten Verdrängerkomponente 4 und auch die Innenverzahnung 13 der zweiten Komponente 5 erkennbar sind.

Hier ist auch erkennbar, dass das Gehäuse 12 des Drehdämpfers 1 drei Abschnitte umfasst, nämlich einen ersten Endbereich 22, ein Mittelbereich 23 und einen zweiten Endbereich 24. Hier wird jeder Bereich durch ein separates Teil gebildet. Möglich ist es auch, dass noch mehr Teile vorgesehen sind, oder dass insgesamt nur zwei Gehäusehälften vorgesehen sind.

In dem Gehäuse 12 sind in dem hier linken Endbereich 22 und in dem hier rechten zweiten Endbereich 24 jeweils eine elektrische Spule 9 jeweils in einem Spulenhalter 38 aufgenommen.

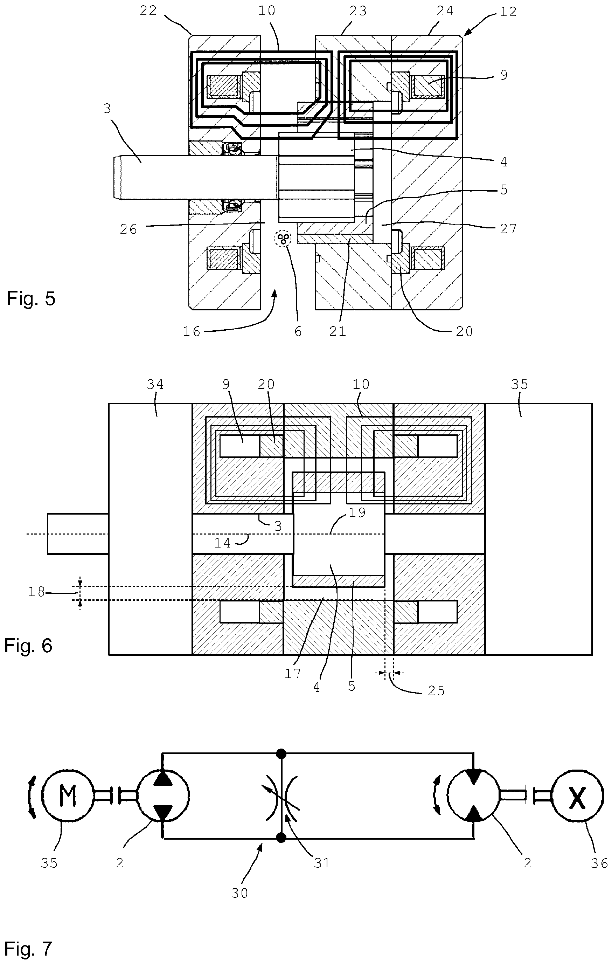

Axial benachbart zu jeder elektrischen Spule 9 ist ein Ring 20 vorgesehen, wobei die Ringe 20 zwischen den beiden Spulen 9 angeordnet sind und hier jeweils von außen an den Mittelbereich 23 angrenzen. Die Ringe 20 sind axial benachbart zu den elektrischen Spulen 9 angeordnet, um dort einen magnetischen Kurzschluss zu verhindern, wie mit Bezug auf die Figuren 4 und 5 im Folgenden noch genauer erläutert werden wird.

An der Dämpferwelle 3 ist ein Winkelsensor 32 vorgesehen, der beispielsweise als Absolutdrehwinkelgeber ausgeführt sein kann. Die Dämpferwelle 3 ist über eine Dichtung 28 zum Innenraum 16 hin abgedichtet. Zwischen den Gehäuseteilen der unterschiedlichen Bereiche sind umlaufenden Dichtungen 42 angeordnet, um den Austritt von magnetorheologischen Fluid aus dem Innenraum der Verdrängereinrichtung 2 hier radial nach außen durch die Grenzflächen zwischen den Teilen 22, 23 und 24 zu verhindern.

Die zweite Verdrängerkomponente 5 mit einer insgesamt etwa zylindrischen Außenform weist auf dem Außenumfang mehrere Führungseinheiten 21 auf, die sich hier im Ausführungsbeispiel über die vollständige axiale Länge erstrecken, können in anderen Ausführungen aber auch zum Beispiel kürzer ausgebildet sein. Die Führungseinheiten 21 stehen radial nach außen über die zweite Verdrängerkomponente 5 bzw. das Kernmaterial der zweiten Verdrängerkomponente 5 nach außen über und sorgen für einen definierten radialen Abstand zwischen der Außenoberfläche des Kernmaterials der zweiten Verdrängerkomponente 5 und dem Innenumfang des Gehäuses 12 an dem Mittelbereich 23.

Figur 3b zeigt eine stark schematische Draufsicht auf einen Endbereich 22 oder 24 des Gehäuses 12 des Drehdämpfers 1 nach Figur 1, wobei der innere Aufbau des Drehdämpfers 1 und die Strömungsführung deutlicher wird. Die Zeichnung zeigt z. B. den Endbereich 22 in einer Draufsicht von innen, aber ohne die Verdrängerkomponente 4. Die Innenkontur 13 der äußeren Verdrängerkomponente 5 ist gestrichelt eingezeichnet und kann in unterschiedlichen Ausgestaltungen mehr oder weniger Zähne aufweisen. Radial außerhalb der radial äußersten Zahnkontur der Verdrängerkomponenten 4 und 5 ist hier eine Umfangsnut 50 in dem Endbereich 22 (und 24) vorgesehen, die sich in dem Endbereich 22 (und 24) vollständig um die Achse herum erstreckt. Diese Umfangsnut 50 dient als Sammel- (50) bzw. Verteilkanal (51) für das MRF. Die Umfangsnut kann sich aber auch nur über Teilbereiche des Umfangs erstrecken.

Auf der hier in der Zeichnung linken Seite ist auf der Saugseite 26 bzw. an dem Einlass eine Saugniere 26a ausgebildet, durch die das MRF in den Zwischenraum 43 zwischen der Innenverzahnung 13 und der Außenverzahnung 11 angesaugt werden kann. Das durch die Saugniere 26a angesaugte MRF strömt dazu von der Druckseite 27 durch den Dämpfungskanal 17 bzw. dessen Teilsegmente zu der Saugseite 26. Der Dämpfungskanal 17 erstreckt sich dabei über (nahezu) den vollständigen äußeren Umfang der äußeren Verdrängerkomponente 5. Es können an dem vollständigen Umfang z. B. die schmalen Segmente der Führungseinheiten 21 fehlen.

Die Ansaugniere 26a und die in dem anderen Endbereich an der anderen Stirnseite ausgebildete Druckniere 27a erstrecken sich jeweils etwa nierenförmig über einen Winkelbereich <180°, wie es bei Zahnringpumpen oder Gerotorpumpen üblich ist. Die Umfangsnut 50 und die Ansaugniere 26a bilden zusammen einen Zufuhrkanal, während die Umfangsnut 51 und die Druckniere 27a zusammen einen Abfuhrkanal bilden.

Die Sammelnut 50 auf der Saugseite und die Sammelnut 51 sammeln auf der Saugseite das MRF und geben es auf der Druckseite über dem vollständigen Umfang ab. Ein "Übersprechen" bzw. ein Fluidkurzschluss wird dadurch ausgeschlossen, dass die Sammelnuten 50 und 51 auf unterschiedlichen Stirnseiten angeordnet sind, sodass Saug- und Druckseite hier auch axial voneinander getrennt sind. Im Bereich der Saugniere bzw. der Druckniere, deren Darstellung durch Horizontalspiegelung von Fig. 3b erhaltbar ist, wird das MRF gesammelt bzw. verteilt. Die Sammelnut 51 kann auch als Verteilnut 51 bezeichnet werden.

Die Saug- und die Druckniere können auch an der gleichen Stirnseite vorgesehen sein, wobei dann auf (vollumfängliche) Sammelnuten 50 und 51 verzichtet werden muss, da sonst ein Fluidkurzschluss entstehen würde. Die Sammelnuten müssen sich nicht um den vollständigen Umfang erstrecken. Dies gilt auch für den Dämpfungskanal 17.

Figur 4 zeigt eine Explosionsdarstellung des Drehdämpfers 1 im Schnitt, wobei das hier linke Gehäuseteil mit dem ersten Endbereich 22 und auch die erste Verdrängerkomponente 4 und die zweite Verdrängerkomponente 5 jeweils ein Stück axial versetzt angeordnet dargestellt sind, um ein besseres Verständnis der technischen Funktion zu ermöglichen.

Die Dämpferwelle 3 ist hier einstückig mit der ersten Verdrängerkomponente 4 ausgebildet, die auf ihrem Außenumfang eine Außenverzahnung 11 aufweist, die mit einer Innenverzahnung 13 im Inneren der zweiten Verdrängerkomponente 5 kämmt. Radial umgeben wird die zweite Verdrängerkomponente 5 von einem Dämpfungskanal 17, durch den das hier im Inneren der zweiten Verdrängerkomponente 5 durchgeförderte magnetorheologische Fluid wieder zur axial anderen Seite zurückströmen kann.

Außen an dem Gehäuse 12 ist hier die Steuereinrichtung 7 abgebildet, die über einen Energiespeicher 37 oder Akkumulator oder dergleichen mit dem nötigen Strom versorgt werden kann, auch wenn eine elektrische Verbindung zum Bordnetz des Personentransportmittels ausfällt.

Ein Ausgleichsvolumen 29 stets Verfügung, um einen Volumenausgleich bei unterschiedlichen Temperaturen zur Verfügung zu stellen. Das Ausgleichsvolumen 29 kann eine komprimiere Masse oder eine komprimiere Gasblase enthalten, um einen Volumenausgleich für unterschiedliche Temperaturen zur Verfügung zu stellen.

Die Dämpferwelle 3 ist über ein Lager 44 gelagert. Die Drehachse 14 der ersten Verdrängerkomponente 4 stimmt mit der Drehachse der Dämpferwelle 3 überein. Die Drehachse 15 der zweiten Verdrängerkomponente 5 ist dazu parallel versetzt.

Figur 5 zeigt eine ähnliche Darstellung wie Figur 4, wobei aber einige Magnetfeldlinien des Magnetfeldes 10 beispielhaft eingezeichnet sind. Die Magnetfeldlinien verlaufen jeweils durch einen Endbereich und den Mittelbereich 23 des Gehäuses 12 und treten etwa radial durch den Dämpfungsspalt 18 (vgl. Fig. 6) zwischen dem Gehäuse 12 und der zweiten Verdrängerkomponente 5 hindurch und treten dann von der zweiten Verdrängerkomponente 5 in die erste Verdrängerkomponente 4 über. Von dort aus verlaufen die Magnetfeldlinien durch den Axialspalt 25 (vgl. Fig. 6) zwischen der ersten bzw. zweiten Verdrängerkomponente 4, 5 und dem jeweiligen Endbereich 22, 24, sodass sich geschlossene Magnetfeldlinien ergeben. Hier werden durch jeweils eine elektrische Spule in jeweils einem Endbereich 22, 24 Magnetfelder erzeugt, die sowohl den radialen Spalt zwischen den Verdrängerkomponenten und auch die beiden axialen stirnseitigen Axialspalte 25 abdichten.

Dadurch, dass in jedem Endbereich des Gehäuses 12 eine elektrische Spule 9 vorgesehen ist und dadurch, dass sich die elektrischen Spulen 9 über den Umfang des jeweiligen Endbereichs erstrecken, wird praktisch jeder Spalt zwischen den Verdrängerkomponenten 4, 5 und zwischen den Verdrängerkomponenten 4, 5 und dem Gehäuse 12 mit dem Magnetfeld 10 der Magnetfeldquelle 8 beaufschlagt. Dadurch verketten die im Innenraum 16 des Drehdämpfers 1 bzw. des Gehäuses 12 vorhandenen magnetorheologischen Partikel des magnetorheologischen Fluids 6 miteinander, wobei die Stärke der Verkettung von der Stärke des einwirkenden Magnetfeldes 10 abhängt.

Durch die magnetisch nicht leitenden Ringe 20, die insgesamt eine relative Permeabilität kleiner zehn aufweisen, wird ein magnetischer Kurzschluss in den jeweiligen Endbereichen 22, 24 zuverlässig verhindert. Es ist auch möglich, dass ein Endbereich (oder beide) aus zwei oder mehr Teilen oder Abschnitten besteht. Dabei ist der an die Verdrängerkomponenten 4,5 angrenzende Abschnitt vorzugsweise magnetisch besser leitend als der magnetisch nicht leitende Ring. Der angrenzende Abschnitt (oder der gesamte Endbereich) weist vorzugsweise eine relative Permeabilität größer zehn und insbesondere größer 100 und vorzugsweise größer 1000 auf.

Figur 6 zeigt eine leicht modifizierte Ausführungsform in schematisch geschnittener Darstellung, wobei die Abstände und Spalte 18, 25 hier vergrößert dargestellt sind, um sie bei dem dargestellten Maßstab überhaupt sichtbar machen zu können. Hier weist der Drehdämpfer 1 optional einen Elektromotor 35 an dem zweiten Endbereich 24 auf. Dazu ist es möglich, dass sich die Dämpferwelle vollständig durch den Drehdämpfer 1 hindurch erstreckt, sodass der Elektromotor 35 angekoppelt ist. Auf der Seite des ersten Endbereich 22 kann hier ein Vorsatzgetriebe 34 vorgeschaltet werden.

Deutlich sichtbar sind der Axialspalt 25 und der Radialspalt 18 zwischen den Verdrängerkomponenten 4, 5 und den Endbereichen 22, 24 bzw. zwischen der zweiten Komponente 5 und dem Gehäuse 12 in radialer Richtung. In Realität ist der Radialspalt 18 vorzugsweise etwa 2 bis 4 mal und insbesondere etwa dreimal so groß wie der Axialspalt 25. In konkreten Ausgestaltungen haben sich ein Axialspalt 25 von etwa 0,03 mm und ein Radialspalt von etwa bis 0,3 mm als günstig herausgestellt.

Figur 7 zeigt schließlich ein Ausführungsbeispiel in stark schematischer Darstellung, bei dem ein Elektromotor 35 und ein Aktor 36 vorgesehen sein können. Hier umfasst die Vorrichtung 100 zwei Verdrängereinrichtungen 2 und wenigstens ein externes Ventil 30 mit einem Ventilkanal 31 als Dämpfungskanal. Bei dieser Ausgestaltung ist es möglich, dass die einzelnen Verdrängereinrichtungen 2 keinen expliziten Dämpfungskanal aufweisen, sondern dass nur der Dämpfungskanal 31 an dem externen Dämpfungsventil 30 vorgesehen ist. Dort wirkt dann auch das Magnetfeld der Magnetfeldquelle 8. Bei dieser Ausgestaltung ist es möglich, den insbesondere als Rotationseinheit ausgeführten Aktor zu drehen. Die Drehrichtung des Elektromotors 35 kann verändert werden, um einen Linkslauf bzw. Rechtslauf des Aktors einzustellen. Damit kann der Sicherheitsgurt auch aufgewickelt werden.

**Bezugszeichenliste:**

| | | | |
|---|---|---|---|
| 1 | Drehdämpfer | 26a | Saugniere |
| 2 | Verdrängereinrichtung | 27 | Auslass, Druckseite |
| 3 | Dämpferwelle | 27a | Druckniere |
| 4 | Verdrängerkomponente | 28 | Dichtung an 3 |
| 5 | Verdrängerkomponente | 29 | Ausgleichsvolumen |
| 6 | magnetorheologisches Fluid | 30 | Dämpfungsventil |
| 7 | Steuereinrichtung | 31 | Ventilkanal |
| 8 | Magnetfeldquelle | 32 | Winkelsensor |
| 9 | elektrische Spule | 33 | Belastungssensor |
| 10 | Magnetfeld | 34 | Vorsatzgetriebe |
| 11 | Außenverzahnung von 4 | 35 | Elektromotor |
| 12 | Gehäuse von 2 | 36 | Aktor |
| 13 | Innenverzahnung von 5 | 37 | Energiespeicher |
| 14 | Drehachse von 4 | 38 | Spulenhalter |
| 15 | Drehachse von 5 | 39 | Dauermagnet |
| 16 | Innenraum von 2 | 42 | Dichtung von 23 |
| 17 | Dämpfungskanal | 43 | Zwischenraum |
| 18 | Dämpfungsspalt | 44 | Lager |
| 19 | Achse von 9 | 50 | Sammelnut |
| 20 | Ring in 12 | 51 | Sammelnut |
| 21 | Führungseinheit | 100 | Vorrichtung |
| 22 | erster Endbereich | 101 | Sicherheitsgurt |
| 23 | Mittelbereich | 102 | Gurtrolle |
| 24 | zweiter Endbereich | 103 | Kupplung |
| 25 | Axialspalt | 200 | Personentransportmittel |
| 26 | Einlass, Saugseite | 201 | Insassensensor |

## Patentansprüche

1. Vorrichtung (100) zur Beeinflussung der Kraft eines Sicherheitsgurtes (101) auf z. B. einen Insassen eines Personentransportmittels (200) beispielsweise bei einer Kollision, umfassend wenigstens einen Drehdämpfer (1) mit einem magnetorheologischen Fluid (6) als Arbeitsfluid zur Dämpfung einer Drehbewegung einer Dämpferwelle (3) des Drehdämpfers (1) beim Auf- oder Abwickeln des Sicherheitsgurts (101), und wobei die Dämpferwelle wenigstens abschnittsweise in einem Gehäuse (12) des Drehdämpfers aufgenommen ist,
wobei der Drehdämpfer (1) wenigstens eine Verdrängereinrichtung (2) mit ineinander eingreifenden und durch das magnetorheologische Fluid (6) benetzten Verdrängerkomponenten (4,5) aufweist, und dass durch eine zugeordnete Steuereinrichtung (7) ein Magnetfeld (10) einer wenigstens eine elektrische Spule (9) umfassenden Magnetfeldquelle (8) steuerbar und das magnetorheologische Fluid (6) beeinflussbar sind, um eine Dämpfung der Drehbewegung der Dämpferwelle (3) einzustellen,
**dadurch gekennzeichnet,**
**dass** ein wesentlicher Teil des Magnetfeldes der Magnetfeldquelle einen Axialspalt (25) zwischen dem Gehäuse und wenigstens einer der Verdrängerkomponenten durchtritt.

2. Vorrichtung (100) nach dem vorhergehenden Anspruch, wobei eine erste Verdrängerkomponente (4) der Verdrängerkomponenten mit der Dämpferwelle (3) fest verbunden ist und wobei eine zweite Verdrängerkomponente (5) der Verdrängerkomponenten in einem Gehäuse (12) der Verdrängereinrichtung (2) drehbar aufgenommen ist, wobei die erste Verdrängerkomponente (4) mit der zweiten Verdrängerkomponente (5) im Eingriff steht und exzentrisch zu der zweiten Verdrängerkomponente (5) angeordnet ist und wobei insbesondere die erste Verdrängerkomponente (4) eine Außenverzahnung (11) aufweist und wobei die zweite Verdrängerkomponente (5) eine Innenverzahnung (13) aufweist, und wobei die zweite Verdrängerkomponente (5) drehbar in dem Gehäuse (12) aufgenommen ist.

3. Vorrichtung (100) nach einem der vorhergehenden Ansprüche, wobei ein Innenraum (16) des Drehdämpfers (1) einem wesentlichen Teil des Magnetfeldes (10) der Magnetfeldquelle (8) aussetzbar ist.

4. Vorrichtung (100) nach einem der vorhergehenden Ansprüche, wobei der Drehdämpfer (1) wenigstens einen dem Magnetfeld (10) der Magnetfeldquelle (8) aussetzbaren Dämpfungskanal (17) umfasst und wobei insbesondere wenigstens ein Dämpfungsspalt (18) als Dämpfungskanal (17) radial zwischen der zweiten Verdrängerkomponente (5) und dem Gehäuse (12) angeordnet ist und/oder wobei der Dämpfungsspalt (18) wenigstens einem wesentlichen Teil des Magnetfeldes (10) der Magnetfeldquelle (8) aussetzbar ist und/oder wobei die zweite Verdrängerkomponente (5) in dem Gehäuse (12) über eine Mehrzahl an Führungseinheiten (21) drehbar geführt wird, um einen definierten Dämpfungsspalt (18) zwischen der zweiten Verdrängerkomponente (5) und dem Gehäuse (12) zu gewährleisten.

5. Vorrichtung (100) nach einem der vorhergehenden Ansprüche, wobei das Gehäuse (12) einen ersten und einen zweiten Endbereich (22, 24) und dazwischen einen Mittelbereich (23) umfasst, wobei in wenigstens einem der beiden Endbereiche (22, 24) eine elektrische Spule (8) aufgenommen ist, wobei eine Achse (19) der Spule (9) insbesondere im Wesentlichen parallel zur Dämpferwelle (3) ausgerichtet ist.

6. Vorrichtung (100) nach einem der vorhergehenden Ansprüche, wobei das Gehäuse (12) wenigstens zu einem wesentlichen Teil aus einem magnetisch leitenden Material mit einer relativen Permeabilität größer 100 besteht.

7. Vorrichtung (100) nach einem der vorhergehenden Ansprüche, wobei axial benachbart zu der elektrischen Spule (9) in dem Gehäuse (12) ein Ring (20) aus einem Material mit einer relativen Permeabilität kleiner 10 angeordnet ist, wobei der Ring (20) insbesondere axial zwischen der elektrischen Spule (9) und den Verdrängerkomponenten (4, 5) angeordnet ist.

8. Vorrichtung (100) nach einem der vorhergehenden Ansprüche, wobei ein wesentlicher Teil des Magnetfeldes (10) der Magnetfeldquelle (8) durch einen Axialspalt (25) zwischen dem Gehäuse (12) und den Verdrängerkomponenten (4, 5) durchtritt.

9. Vorrichtung (100) nach einem der vorhergehenden Ansprüche, wobei das magnetorheologische Fluid (6) durch Drehbewegung der ineinander eingreifenden Verdrängerkomponenten (4, 5) von einem Einlass (26) der Verdrängereinrichtung (2) zu einem Auslass (27) der Verdrängereinrichtung (2) förderbar ist und wobei insbesondere der Einlass (26) und der Auslass (27) auf unterschiedlichen axialen Seite der Verdrängereinrichtung (2) angeordnet sind und/oder wobei das Magnetfeld (10) in einem Bereich des Einlasses (26) schwächer ausgebildet ist als in einem Bereich des Auslasses (27).

10. Vorrichtung (100) nach einem der vorhergehenden Ansprüche, wobei funktional zwischen dem Drehdämpfer (1) und der Gurtrolle (102) eine Art Kupplung (103) vorgesehen ist und/oder wobei ein Ausgleichsvolumen (29) vorgesehen ist, um einen Temperaturausgleich zu ermöglichen.

11. Vorrichtung (100) nach einem der vorhergehenden Ansprüche, wobei wenigstens ein externes Dämpfungsventil (30) mit einem Ventilkanal (31) als Dämpfungskanal (17) vorgesehen ist.

12. Vorrichtung (100) nach einem der vorhergehenden Ansprüche, wobei ein Winkelsensor (32) ein Maß für eine Winkelposition der Dämpferwelle (3) erfasst.

13. Vorrichtung (100) nach einem der vorhergehenden Ansprüche, wobei der Drehdämpfer (1) mit einem Elektromotor (35) zum Abwickeln und/oder Aufwickeln des Sicherheitsgurtes (101) gekoppelt ist und/oder wobei wenigstens ein externer Aktor (36) in Fluidverbindung mit der Verdrängereinrichtung (2) steht.

14. Vorrichtung nach einem der vorhergehenden Ansprüche, wobei ein Insassensensor (201) zur Erfassung einer Position oder eines Gewicht oder eines Körperbaus oder eines Alters eines Insassen vorgesehen ist, wobei die Steuereinrichtung (7) dazu ausgebildet und eingerichtet ist, den Drehdämpfer (1) in Abhängigkeit von der wenigstens einen erfassten Messgröße zu steuern.

15. Verfahren zur Beeinflussung einer Kraft eines Sicherheitsgurtes (101) auf z. B. einen Insassen eines Personentransportmittels (200) bei einer Kollision, wobei ein Maß für eine durch den Sicherheitsgurt (101) auf den Insassen wirkende Belastung ermittelt wird und danach ein Magnetfeld (10) einer Magnetfeldquelle (8) in Abhängigkeit von dem ermittelten Maß in einem ein magnetorheologisches Fluid (6) als Arbeitsfluid aufweisenden Dämpfungskanal (17) eines Drehdämpfers (1) eingestellt wird, um eine Drehbewegung einer Dämpferwelle (3) des Drehdämpfers (1) beim Auf- oder Abwickeln des Sicherheitsgurts (101) zu dämpfen, wobei die Dämpferwelle wenigstens abschnittsweise in einem Gehäuse (12) des Drehdämpfers aufgenommen ist und ein wesentlicher Teil des Magnetfeldes der Magnetfeldquelle einen Axialspalt (25) zwischen dem Gehäuse und wenigstens einer der Verdrängerkomponenten durchtritt.

## Claims

1. Apparatus (100) for influencing the force of a safety belt (101) acting e.g. on an occupant of a passenger transportation means (200) for example in a collision, comprising at least one rotary damper (1) with a magnetorheological fluid (6) acting as the working fluid for damping the rotary motion of a damper shaft (3) of the rotary damper (1) during winding or unwinding of the safety belt (101), and wherein the damper shaft is accommodated at least in sections in a housing (12) of the rotary damper, wherein the rotary damper (1) includes at least one displacing device (2) with intermeshing displacing components (4, 5) wetted by the magnetorheological fluid (6), and that an associated control device (7) controls a magnetic field (10) of a magnetic field source (8) comprising at least one electric coil (9), and influences the magnetorheological fluid (6) for setting and adjusting a damping of the rotary motion of the damper shaft (3),
**characterized in that** a substantial part of the magnetic field of the magnetic field source passes through an axial gap (25) between the housing and at least one of the displacing components.

2. The apparatus (100) according to the preceding claim wherein a first displacing component (4) of the displacing components is fixedly connected with the damper shaft (3) and wherein a second displacing component (5) of the displacing components is rotatably received in a housing (12) of the displacing device (2), wherein the first displacing component (4) is in engagement with the second displacing component (5) and is disposed off-center relative to the second displacing component (5) and wherein in particular the first displacing component (4) comprises an external toothing (11) and wherein the second displacing component (5) comprises an internal toothing (13), and wherein the second displacing component (5) is rotatably received in the housing (12).

3. The apparatus (100) according to any of the preceding claims wherein an internal space (16) of the rotary damper (1) can be exposed to a substantial part of the magnetic field (10) of the magnetic field source (8).

4. The apparatus (100) according to any of the preceding claims wherein the rotary damper (1) comprises at least one damping duct (17) that can be exposed to the magnetic field (10) of the magnetic field source (8) and wherein in particular at least one damping gap (18) acting as a damping duct (17) is disposed radially between the second displacing component (5) and the housing (12) and/or wherein the damping gap (18) can be exposed at least to a substantial part of the magnetic field (10) of the magnetic field source (8) and/or wherein the second displacing component (5) is rotatably guided in the housing (12) by means of a plurality of guide units (21) to ensure a defined damping gap (18) between the second displacing component (5) and the housing (12).

5. The apparatus (100) according to any of the preceding claims wherein the housing (12) comprises a first and a second end portion (22, 24) and in-between a center portion (23), wherein at least one of the two end portions (22, 24) receives an electric coil (8), wherein the axis (19) of the coil (9) is in particular oriented substantially in parallel to the damper shaft (3).

6. The apparatus (100) according to any of the preceding claims wherein the housing (12) consists at least substantially of a magnetically conducting material showing a relative permeability of above 100.

7. The apparatus (100) according to any of the preceding claims wherein a ring (20) of a material showing relative permeability of less than 10 is disposed in the housing (12) axially adjacent to the electric coil (9), wherein the ring (20) is disposed in particular axially between the electric coil (9) and the displacing components (4, 5).

8. The apparatus (100) according to any of the preceding claims wherein a substantial part of the magnetic field (10) of the magnetic field source (8) passes through an axial gap (25) between the housing (12) and the displacing components (4, 5).

9. The apparatus (100) according to any of the preceding claims wherein by way of rotary motion of the intermeshing displacing components (4, 5) the magnetorheological fluid (6) can be conveyed from an inlet (26) of the displacing device (2) to an outlet (27) of the displacing device (2) and wherein in particular the inlet (26) and the outlet (27) are disposed on different axial sides of the displacing device (2) and/or wherein the magnetic field (10) is weaker in a region of the inlet (26) than in a region of the outlet (27).

10. The apparatus (100) according to any of the preceding claims wherein a type of clutch (103) is functionally provided between the rotary damper (1) and the belt spool (102) and/or wherein an equalizing volume (29) is provided to enable temperature equalization.

11. The apparatus (100) according to any of the preceding claims wherein at least one external damping valve (30) is provided having a valve duct (31) that acts as a damping duct (17).

12. The apparatus (100) according to any of the preceding claims wherein an angle sensor (32) captures a measure of an angular position of the damper shaft (3).

13. The apparatus (100) according to any of the preceding claims wherein the rotary damper (1) is coupled with an electric motor (35) for unwinding and/or winding the safety belt (101) and/or wherein at least one external actuator (36) is in fluid connection with the displacing device (2).

14. The apparatus according to any of the preceding claims wherein an occupant sensor (201) for capturing the position or weight or bodily structure or the age of an occupant is provided, wherein the control device (7) is configured and set up to control the rotary damper (1) in dependence on the at least one captured measured quantity.

15. Method for influencing the force of a safety belt (101) acting e.g. on an occupant of a passenger transportation means (200) in a collision, wherein a measure of a load acting on the occupant by the safety belt (101) is determined and accordingly a magnetic field (10) of a magnetic field source (8) is set and adjusted in dependence on the determined measure in a damping duct (17) of a rotary damper (1) containing a magnetorheological fluid (6) acting as a working fluid, to damp a rotary motion of a damper shaft (3) of the rotary damper (1) during winding or unwinding of the safety belt (101), wherein the damper shaft is received at least in sections in a housing (12) of the rotary damper and a substantial part of the magnetic field of the magnetic field source passes through an axial gap (25) between the housing and at least one of the displacing components.

## Revendications

1. Dispositif (100) destiné à influer sur la force d'une ceinture de sécurité (101) agissant sur, par exemple, un occupant d'un moyen de transport de personnes (200), par exemple lors d'une collision, comprenant au moins un amortisseur rotatif (1) avec un fluide magnétorhéologique (6) comme fluide de travail pour amortir un mouvement de rotation d'un arbre d'amortisseur (3) de l'amortisseur rotatif (1) pendant l'enroulement ou le déroulement de la ceinture de sécurité (101), et dans lequel l'arbre d'amortisseur est logé au moins par sections dans un boîtier (12) de l'amortisseur rotatif, dans lequel l'amortisseur rotatif (1) présente au moins un moyen de déplacement (2) ayant des composants de déplacement (4, 5) engrenant les uns dans les autres et mouillés par ledit fluide magnétorhéologique (6), et dans lequel un champ magnétique (10) d'une source de champ magnétique (8) comprenant au moins une bobine électrique (9) est commandable par un dispositif de commande (7) associé, et le fluide magnétorhéologique (6) peut être influencé afin de régler un amortissement du mouvement de rotation de l'arbre d'amortisseur (3),
**caractérisé par le fait qu'**une partie essentielle du champ magnétique de la source de champ magnétique traverse une fente axiale (25) entre le boîtier et au moins l'un des composants de déplacement (4, 5).

2. Dispositif (100) selon la revendication précédente, dans lequel un premier composant de déplacement (4) des composants de déplacement est solidaire de l'arbre d'amortisseur (3) et dans lequel un deuxième composant de déplacement (5) des composants de déplacement est logé de manière rotative dans un boîtier (12) du dispositif de déplacement (2), dans lequel le premier composant de déplacement (4) est en prise avec le deuxième composant de déplacement (5) et est disposé de manière excentrique par rapport au deuxième composant de déplacement (5), et dans lequel, en particulier, le premier composant de déplacement (4) présente une denture extérieure (11) et dans lequel le deuxième composant de déplacement (5) présente une denture intérieure (13), et dans lequel le deuxième composant de déplacement (5) est logé de manière rotative dans le boîtier (12).

3. Dispositif (100) selon l'une quelconque des revendications précédentes, dans lequel un espace intérieur (16) de l'amortisseur rotatif (1) peut être exposé à une partie essentielle du champ magnétique (10) de la source de champ magnétique (8).

4. Dispositif (100) selon l'une quelconque des revendications précédentes, dans lequel l'amortisseur rotatif (1) comprend au moins un canal d'amortissement (17) qui peut être exposé au champ magnétique (10) de la source de champ magnétique (8), et dans lequel, en particulier, au moins une fente d'amortissement (18) est disposé, en tant que canal d'amortissement (17), radialement entre le deuxième composant de déplacement (5) et le boîtier (12), et/ou dans lequel la fente d'amortissement (18) peut être exposée à au moins une partie essentielle du champ magnétique (10) de la source de champ magnétique (8), et/ou dans lequel le deuxième composant de déplacement (5) est guidé de manière rotative, par une pluralité d'unités de guidage (21), dans le boîtier (12) afin de garantir une fente d'amortissement (18) définie entre le deuxième composant de déplacement (5) et le boîtier (12).

5. Dispositif (100) selon l'une quelconque des revendications précédentes, dans lequel ledit boîtier (12) comprend une première et une deuxième zones d'extrémité (22, 24) et une zone médiane (23) située entre celles-ci, dans au moins l'une des deux zones d'extrémité (22, 24) étant logée une bobine électrique (8), dans lequel un axe (19) de la bobine (9) est orienté, en particulier, de manière sensiblement parallèle à l'arbre d'amortisseur (3).

6. Dispositif (100) selon l'une quelconque des revendications précédentes, dans lequel le boîtier (12) se compose, au moins pour une partie essentielle, d'un matériau magnétiquement conducteur ayant une perméabilité relative supérieure à 100.

7. Dispositif (100) selon l'une quelconque des revendications précédentes, dans lequel une bague (20) en un matériau ayant une perméabilité relative inférieure à 10 est disposée dans le boîtier (12) de manière axialement voisine de la bobine électrique (9), dans lequel, en particulier, la bague (20) est disposée axialement entre la bobine électrique (9) et les composants de déplacement (4, 5).

8. Dispositif (100) selon l'une quelconque des revendications précédentes, dans lequel une partie essentielle du champ magnétique (10) de la source de champ magnétique (8) traverse une fente axiale (25) entre le boîtier (12) et les composants de déplacement (4, 5).

9. Dispositif (100) selon l'une quelconque des revendications précédentes, dans lequel le fluide magnétorhéologique (6) peut être transporté par mouvement de rotation des composants de déplacement (4, 5) engrenant les uns dans les autres, depuis une entrée (26) du dispositif de déplacement (2) jusqu'à une sortie (27) du dispositif de déplacement (2), et dans lequel, en particulier, l'entrée (26) et la sortie (27) sont disposées sur des côtés axiaux différents du dispositif de déplacement (2), et/ou dans lequel le champ magnétique (10) est plus faible dans une zone de l'entrée (26) que dans une zone de la sortie (27).

10. Dispositif (100) selon l'une quelconque des revendications précédentes, dans lequel une sorte d'accouplement (103) est prévue fonctionnellement entre l'amortisseur rotatif (1) et l'enrouleur automatique (102), et/ou dans lequel un volume de compensation (29) est prévu afin de permettre une compensation de température.

11. Dispositif (100) selon l'une quelconque des revendications précédentes, dans lequel on prévoit au moins une vanne d'amortissement externe (30) ayant un canal de vanne (31) en tant que canal d'amortissement (17).

12. Dispositif (100) selon l'une quelconque des revendications précédentes, dans lequel un capteur d'angle (32) détecte une mesure pour une position angulaire de l'arbre d'amortisseur (3).

13. Dispositif (100) selon l'une quelconque des revendications précédentes, dans lequel l'amortisseur rotatif (1) est couplé à un moteur électrique (35) destiné à dérouler et/ou à enrouler la ceinture de sécurité (101), et/ou dans lequel au moins un actionneur externe (36) est en communication fluidique avec le dispositif de déplacement (2).

14. Dispositif selon l'une quelconque des revendications précédentes, dans lequel un capteur d'occupant (201) destiné à détecter une position ou un poids ou un physique ou un âge d'un occupant est prévu, dans lequel le dispositif de commande (7) est conçu et agencé pour commander l'amortisseur rotatif (1) en fonction de ladite au moins une grandeur à mesurer détectée.

15. Procédé destiné à influer sur une force d'une ceinture de sécurité (101) agissant sur, par exemple, un occupant d'un moyen de transport de personnes (200) lors d'une collision, dans lequel une mesure pour une charge agissant par la ceinture de sécurité (101) sur l'occupant est déterminée et, puis, un champ magnétique (10) d'une source de champ magnétique (8) est réglé en fonction de la mesure déterminée dans un canal d'amortisseur (17) d'un amortisseur rotatif, (1) qui présente un fluide magnétorhéologique (6) en tant fluide de travail, pour amortir un mouvement de rotation d'un arbre d'amortisseur (3) de l'amortisseur rotatif (1) pendant l'enroulement ou le déroulement de la ceinture de sécurité (101), dans lequel l'arbre d'amortisseur est logé au moins par sections dans un boîtier (12) de l'amortisseur rotatif et une partie essentielle du champ magnétique de la source de champ magnétique traverse une fente axiale (25) entre le boîtier et au moins l'un des composants de déplacement.
